Europäisches Patentamt

European Patent Office

Office européen des brevets

(11) Veröffentlichungsnummer: **0 339 439**
**A2**

(12) # EUROPÄISCHE PATENTANMELDUNG

(21) Anmeldenummer: **89106955.1**

(22) Anmeldetag: **19.04.89**

(51) Int. Cl.⁴: **B23D 61/18 , B23D 61/06 , B23D 61/16**

(30) Priorität: **23.04.88 DE 3813850**

(43) Veröffentlichungstag der Anmeldung:
**02.11.89 Patentblatt 89/44**

(84) Benannte Vertragsstaaten:
**AT BE CH DE FR GB IT LI LU NL SE**

(71) Anmelder: **MVZ MASCHINENBAU UND VERZAHNUNGSTECHNIK, JOHANNES FALKENSTEIN**
**Zeppelinstrasse 16**
**D-7953 Bad Schussenried(DE)**

(72) Erfinder: **Falkenstein, Johannes**
**Zeppelinstrasse 16**
**D-7953 Bad Schussenried(DE)**

(74) Vertreter: **Patentanwälte Dipl.-Ing. E. Eisele Dr.-Ing. H. Otten**
**Seestrasse 42**
**D-7980 Ravensburg(DE)**

(54) **Sägewerkzeug.**

(57) Es wird ein Sägewerkzeug vorgeschlagen, welches zur Verwendung an Bandsägemaschinen und insbesondere zur Bearbeitung von gesteinsartigen Materialien dient. Um eine Einbettung der Schneidelemente 11, 19 an einem Sägeseil 2 oder einem Sägeband 3 zu erzielen, sind eine erste weichere Kunststoffschicht 10, 17 als Schutz für das Grundmaterial bzw. zur Materialauftragung vorgesehen. Darüber befindet sich eine zweite Kunststoffschicht 14, 21 aus einem harten, verschleißarmen Kunststoff, der die Flexibilität und Biegsamkeit des Sägewerkzeugs wenig beeinträchtigt (hierzu Zeichnung).

Fig. 1

EP 0 339 439 A2

# Sägewerkzeug

Die Erfindung betrifft ein Sägewerkzeug nach dem Oberbegriff des Anspruchs 1. Der Nebenanspruch 3 stellt eine alternative Anwendung des erfindungsgemäßen Gedankens dar.

Bei der Bearbeitung von gesteinsartigen Materialien werden Sägeseile oder Sägebänder als umlaufende Sägewerkzeuge an einer Bandsägemaschine verwendet. Diese Sägewerkzeuge weisen vorzugsweise diamantbeschichtete Schneid- oder Schleifelemente auf, die die Bearbeitung in gesteinsartigen Materialien wie Marmor o. dgl. ermöglichen. Bei Sägeseilen sind diese Schneid- bzw. Schleifelemente beispielsweise als Schneidhülsen oder sogenannte Schneidperlen ausgebildet, die auf das Drahtseil aufgezogen und in Abständen zueinander auf das Drahtseil aufgequetscht werden. Der Zwischenraum zwischen den Schneidperlen kann mit einem Kunststoffüberzug aus einem harten, verschleißarmen Kunststoff oder durch Aufziehen von Metallfedern ausgefüllt sein. Sofern hierdurch die Schneidperlen in ihrer axialen Lage fixiert sind, können diese ggf. auch drehend auf dem Drahtseil befestigt sein.

Die Enden des Drahtseils sind mit Verschlüssen versehen, um ein endloses Seil für eine Bandsägemaschine zu bilden. Um Innenschnitte in Steinmaterialien herstellen zu können, wird der Verschluß geöffnet und das Seil durch eine Bohrung im Werkstück hindurchgeführt.

Bei Sägebändern werden die Schneidelemente beispielsweise auf das aus Federbandstahl bestehende Trägermaterial aufgelötet oder mittels einer Nietverbindung, Schraubverbindung o. dgl. hieran befestigt. Es können auch separate Halterungen für die Schneidelemente vorgesehen sein, wobei die Halterung mit dem Trägermaterial verbunden ist.

Sowohl Sägeseil als auch Sägeband sind im Betrieb einer ständigen Wechselbiegebeanspruchung unterworfen. Dabei hat sich insbesondere bei Sägeseilen gezeigt, daß die verschiedenen Werkstoffkomponenten nicht immer eine optimale Haltbarkeit bzw. Standfestigkeit des Sägewerkzeugs gewährleisten. Zieht man die Schneidperlen auf das Drahtseil auf und umgibt die Zwischenräume zwischen den Schneidperlen mit einer harten, verschleißarmen Kunststoffschicht, so wird das Seil insgesamt hart und wenig flexibel, was zu einem unrunden Lauf und zu einem vorzeitigen Bruch der Litzen führt. Außerdem verhindert der harte Kunststoffüberzug weitgehend eine freie Drehbarkeit der Schneidperlen, da der Kunststoff zum Teil in den Zwischenraum zwischen der Seillitze und der Kunststoffhülse einfließt. Der Kunststoffüberzug wird dabei derart stark gewählt, daß der Außendurchmesser des Kunststoffüberzugs etwa dem Außendurchmesser der Schneidperle entspricht, um keine Absätze im Sägewerkzeug zu bilden. Die Dicke der Kunststoffschicht ist somit durch die Stärke der Schneidperle bzw. Schneidhülse bestimmt. Die Schneidhülse kann jedoch infolge ihrer Wandung und der darauf aufgebrachten Diamantbeschichtung nicht beliebig dünn gemacht werden. Hierdurch ergibt sich eine relativ dicke Kunststoffschicht aus hartem, verschleißfestem Kunststoff, der das Sägewerkzeug jedoch unflexibel macht und die Geschmeidigkeit des litzenförmigen Grundmaterials des Sägeseils vermissen läßt. Ferner kommt es zum vorzeitigen Bruch des Sägeseils.

Die gleichen Gedanken gelten sinngemäß auch für ein Sägeband. Auch hier werden die Schneidelemente auf das Sägebandgrundmaterial aufgebracht und zur Vermeidung von störenden Absätzen mit einer Kunststoffschicht zur Ausfüllung der Zwischenräume zwischen den Schneidelementen überzogen. Auch diese Kunststoffschicht muß hart und verschleißfest bzw. verschleißarm sein, um einen geringen Abtrag des Kunststoffes bei der Bearbeitung in gesteinsartigen Materialien zu ermöglichen. Hierdurch kommt es zu der gleichen schlechten Biegsamkeit und Flexibilität des Sägebandes wie beim Sägeseil geschildert.

Beim Sägeseil geltend die gleichen Betrachtungen auch dann, wenn man die Zwischenräume zwischen den Schneidperlen mit einer Metallfeder ausfüllt. Es kommt dann zu einer ständigen Reibung der Metallfeder mit der Metallitze des Sägeseils, was ebenfalls zu einem erhöhten Verschleiß des Sägeseils führt.

Der Erfindung liegt die Aufgabe zugrunde, die vorstehend geschilderten Nachteile zu vermeiden. Insbesondere soll ein Sägewerkzeug geschaffen werden, welches eine hohe Standfestigkeit bei optimaler Biegsamkeit gewährleistet.

Diese Aufgabe wird ausgehend von einem Sägewerkzeug der gattungsgemäßen Art durch die kennzeichnenden Merkmale des Anspruchs 1 für ein Sägeseil und des Anspruchs 3 für ein Sägeband gelöst.

Durch die weiteren Unteransprüche sind vorteilhafte und zweckmäßige Ausbildungen des Sägewerkzeugs möglich.

Dem erfindungsgemäßen Sägewerkzeug liegt die Erkenntnis zugrunde, daß die Haltbarkeit des Sägeseils oder des Sägebands dann erhöht werden kann, wenn man das Grundmaterial, d. h. das Drahtseil beim Sägeseil oder den Federbandstahl bei einem Sägeband, mit einem ersten Kunststoffüberzug aus weichem flexiblen Kunststoff versieht, um dem Grundmaterial eine Schutzschicht zu verleihen. Diese Schutzschicht gewährleistet zunächst eine gleichbleibende Flexibilität des Grundmaterials und verhindert beim Sägeseil die direkte Berührung der Metallhülse des Schneidelements mit dem metallenen Drahtseil. Dies verhindert einen Verschleiß zwischen diesen Teilen.

Sofern der Zwischenraum zwischen den Schneidperlen bei einem Sägeseil mittels eines Kunststoffüberzuges auszufüllen ist, dient der innere, flexible Kunststoffüberzug quasi als Auffütterung, damit der zweite, harte und verschleißarme darüberliegende Kunststoffüberzug nicht mehr in der sonst üblichen Dicke oder Stärke aufgebracht werden muß. Da sich der äußere, harte Kunststoffüberzug im wesentlichen in gleichem Maße abnützt wie die Schneidperlen, d. h. in geringen Maßen, ist es nicht erforderlich, daß diese harte Kunststoffschicht in der Wandstärke sehr dick gewählt wird. Kann man diese zweite, harte äußere Kunststoffschicht jedoch dünner machen, dann bleibt die Flexibilität des Sägewerkzeuges weitgehend erhalten, was auch insgesamt zu einer geringeren Bruchneigung des Drahtseiles führt.

Durch die erste, das Seil oder das Sägeband komplett überziehende Kunststoffschicht wird demnach dieser Teil des Sägewerkzeugs mit einer Schutzschicht versehen, die jedoch die Flexibilität des Grundmaterials, d. h. des Drahtseils oder des Federbandstahls, nicht beeinträchtigt. Hierdurch wird ein direkter Kontakt mit Metall - Metall durch die aufzubringenden Schneidhülsen oder durch Zwischenfedern zwischen den Schneidhülsen bzw. Schneidperlen vermieden.

Der äußere Kunststoffüberzug kann im Außendurchmesser dem Außendurchmesser der Schneidperlen bzw. den äußeren Abmaßen der Schneidelemente beim Sägeband angepaßt sein, so daß sich ein Sägewerkzeug ohne Absätze ergibt, was für einen gleichmäßigen ruhigen Lauf im Betrieb zweckmäßig ist. Dabei sind die Schneidelemente zunächst ebenfalls mit einer sehr dünnen Schicht des Kunststoffüberzugs umgeben, um vor dem Gebrauch einen Transportschutz bzw. Verletzungsschutz zu erhalten. Im Gebrauch wird dann die auf den Schneidelementen befindliche Kunststoffschicht sowie der übrige entsprechende Bereich des Kunststoffüberzugs sofort abgeschliffen.

Die Dicke der äußeren harten Kunststoffschicht bemißt sich weitgehend danach, wie stark der Verschleiß an den Schneidperlen bzw. den Schneidelementen selbst ist. Sie braucht deshalb nur gleich oder unwesentlich größer zu sein, als der zu erwartende Abtrag an den Schneidelementen.

Weitere erfindungsgemäße Einzelheiten und Vorteile sind in der nachfolgenden Beschreibung der Ausführungsbeispiele angegeben. Es zeigen

Fig. 1 ein erfindungsgemäßes Sägeseil,
Fig. 2a ein Sägeband in Seitenansicht,
Fig. 2b eine Stirnansicht eines Ausschnitts,
Fig. 3 die Verwendung eines Sägeseils bei einem Kreissägeblatt und
Fig. 4 die Verwendung eines Sägeseils bei einer Gattersäge o. dgl.

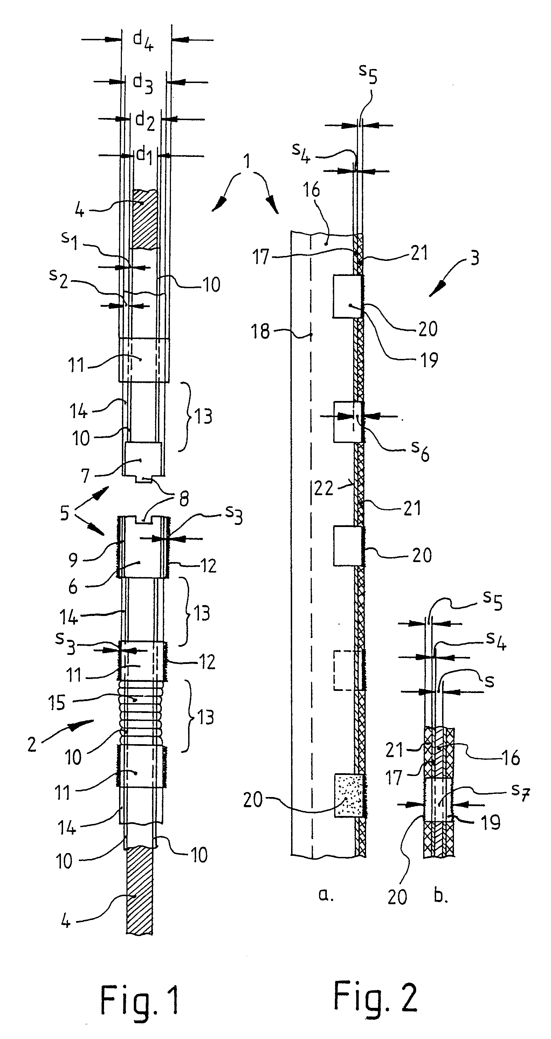

Das in den Figuren 1 und 2 dargestellte Sägewerkzeug 1 ist in Fig. 1 als Sägeseil 2, in Fig. 2 als Sägeband 3 ausgebildet, zur Verwendung als endlos umlaufendes Sägewerkzeug an einer nicht näher dargestellten Bandsägemaschine.

Das in Fig. 1 dargestellte Sägeseil 2 besteht aus einem litzenförmigen Drahtseil 4, an dessen Enden ein aus zwei Teilen bestehender Verschluß 5 befestigt ist. Der Verschluß 5 dient zur Öffnung des endlosen Seiles, damit Innenschnitte in einem Werkstück hergestellt werden können. Die beiden Verschlußteile 6, 7 werden über eine formschlüssige Verdrehsicherung 8 (Nut und Feder) zusammengefügt und mittels einer, die beiden Teile 6, 7 umschließende Überwurfmutter 9 zusammengefügt.

Das litzenförmige Drahtseil 4 ist mit einem ersten Kunststoffüberzug 10 über seine gesamte Oberfläche überzogen. Die auf das Drahtseil 4 mit Kunststoffüberzug 10 aufgezogenen Schneidelemente 11 sind als zylindrische Schneidhülsen bzw. als sogenannte Schneidperlen ausgebildet. Sie werden nicht auf den Grundkörper aufgequetscht, so daß sie sich auf diesem ersten Kunststoffüberzug 10 frei drehen können. Die Schneidperlen 11 weisen an ihrer äußeren Oberfläche eine bekannte Diamantbeschichtung 12 auf, die als Schneidschicht bzw. Schleifschicht zur Abtragung bei der Werkstückbearbeitung dient. Gleichermaßen ist auch der Verschluß 5 mit einer Diamantbeschichtung 12 versehen, damit dieser ebenfalls nach Art eines Schneidelements wirkt.

Der Zwischenraum 13 zwischen zwei Schneidelementen 11 bzw. zwischen dem zum Verschluß 5 benachbarten Schneidelement und dem Verschluß selbst wird zur Fixierung der Lage der Schneidelemente mit einer zweiten, harten und verschleißarmen Kunststoffschicht 14 als Kunststoffüberzug ausgefüllt. Dieser zweite Kunststoffüberzug 14 dient einerseits zur Fixierung der Lage der Schneidelemente 11 und andererseits zur Erzeugung eines möglichst absatzlosen Sägeseils, was für einen ruhigen und gleichmäßigen Lauf des Sägeseils wichtig ist. Der äußere Durchmesser $d_3$ der zweiten Kunststoffschicht 14 wird deshalb gleich oder nur wenig kleiner gewählt als der äußere Durchmesser $d_4$ des Schneidelements 11. Die Wandstärke $s_2$ der äußeren Kunststoffschicht 14 wird mindestens so groß gewählt, daß sie dem Betrag des zu erwartenden Abtrags des Schneidelements 11, d. h. dem Betrag der Wandstärke $s_3$ der Diamantbeschichtung 12, entspricht. In der Fig. 1 ist die Wandstärke $s_2$ der Kunststoffschicht 14

jedoch zur besseren Erkenntlichkeit größer dargestellt.

Die Wandstärke der zweiten Kunststoffschicht ist mit $s_2$, die Wandstärke der Diamantbeschichtung 12 mit $s_3$ bezeichnet. Es gilt demnach $s_2 \approx s_3$. Da die Diamantbeschichtung 12 in aller Regel jedoch sehr dünn ausgeführt ist, wird die Wandstärke $s_2$ der zweiten Kunststoffschicht 14 größer ausfallen als die Wandstärke $s_3$ der Diamantbeschichtung, d. h. $s_2 \gtrsim s_3$.

Die Wandstärke $s_2$ der zweiten Kunststoffschicht 14 sollte nur so stark ausgeführt sein, daß sie als Verschleißschicht beim Abtrag der Diamantbeschichtung 12 wirkt. Gleichzeitig sollte sie eine ausreichende Stützkraft zur Fixierung der Lage der Schneidelemente 11 besitzen.

Der restliche Zwischenraum zwischen dem Innendurchmesser $d_2$ der zweiten Kunststoffschicht 14 und dem Außendurchmesser $d_1$ des Drahtseils 4 wird mit dem ersten Kunststoffüberzug 10 mit einer Wandstärke $s_1$ ausgefüllt. In der Fig. 1 ist die Wandstärke $s_1$ des ersten Kunststoffüberzugs 10 kleiner ausgeführt als die Wandstärke $s_2$ des zweiten Kunststoffüberzugs. Dies kann auch umgekehrt sein. Insbesondere kann der erste Kunststoffüberzug 10 in den Zwischenbereichen 13 in der Wandstärke $s_1$ durchaus noch stärker ausgeführt sein, um als Auffütterung zur Erzielung des Gesamtdurchmessers zu dienen. Der erste Kunststoffüberzug hat dabei den Vorteil, daß er flexibel und weich ausgebildet ist und damit die Flexibilität des Sägeseils gewährleistet. Im Bereich der Schneidelemente 11 ist jedoch die Wandstärke der ersten Kunststoffschicht 10 durch die notwendige Wandstärke der Schneidhülse 11 beschränkt. Der erste Kunststoffüberzug kann demnach stufenförmig ausgebildet sein, wobei er in den Zwischenräumen 13 in der Wandstärke $s_1$ stärker ausgebildet sein kann.

Anstelle des zweiten Kunststoffüberzugs 14 kann auch eine Metallfeder oder Kunststoffeder 15 in den Zwischenraum 13 eingesetzt sein. Dies ist in Fig. 1 im unteren Bereich als Alternative dargestellt. Auch in diesem Fall schützt die innere erste Kunststoffschicht 10 das Drahtseil 4 gegen einen vorzeitigen Verschleiß durch die gegenseitige Berührung von Metallteilen.

In der Fig. 2 ist die Erfindung anhand eines Sägebandes 3 zur Verwendung an einer Bandsägemaschine dargestellt. Auch hier ist das im allgemeinen aus Federbandstahl hergestellte Grundmaterial 16 zunächst ganz oder teilweise mit einem weichen flexiblen Kunststoffüberzug 17 versehen. Der Kunststoffüberzug 17 kann das Grundmaterial 16 ganz oder beispielsweise nur zum Teil, zum Beispiel bis zur Linie 18, überziehen. Die Schneidelemente 19 mit vorderer Diamantbeschichtung 20 sind im allgemeinen fest mit dem Grundmaterial 16 verlötet oder sonstwie vernietet oder verschraubt, so daß in diesem Fall die Anbringung der Schneidelemente vor oder nach der Kunststoffbeschichtung mit der ersten Kunststoffschicht 17 erfolgen kann. Im Gegensatz zur Ausführung nach Fig. 1 mit sich drehenden Schneidhülsen 11, kommt es in Fig. 2 nicht zu einer ständigen Reibung zwischen dem Grundmaterial 16 und den Schneidelementen 19.

Auf die erste weiche Kunststoffschicht 17 mit einer Dicke $s_4$ wird wiederum eine zweite Kunststoffschicht 21 aus einem harten, verschleißfesten Material mit einer Dicke $s_5$ aufgebracht. Die beiden Kunststoffschichten 17, 21 ergeben zusammen eine Stärke, wie sie dem Betrag $s_6$ entspricht, um welchen das Schneidelement 19 über die vordere Kante 22 des Grundmaterials 16 hervorragt, d. h. $s_4 + s_5 \approx s_6$. Die Schichtdicke $s_5$ der zweiten, harten Kunststoffschicht 21 wird möglichst so gewählt, daß sie dem maximal zu erwartenden Abtrag der Diamantbeschichtung 20 entspricht. Sie ist in der Fig. 2 jedoch dicker dargestellt.

Wie aus der Stirnansicht in Fig. 2b zu erkennen ist, ist die Kunststoffbeschichtung, bestehend aus erstem Überzug 17 und zweitem Überzug 21 auch auf die Gesamtbreite $s_7$ abgestimmt, d. h. die Schneidelemente 19 mit Diamantbeschichtung 20 gehen möglichst übergangslos in die darauffolgende Kunststoffschicht über. Hierbei können die in Fig. 2b dargestellten Dicken $s_4$ und $s_5$ der beiden Kunststoffüberzüge 17, 21 ggf. unterschiedliche Werte haben, als in Fig. 2a. Maßgeblich ist die übergangslose Einbettung der Schneidelemente 19 auf dem Sägeband, wobei die zweite, äußere harte Kunststoffschicht nur so dick ausgeführt wird, wie dies für den Abrieb unbedingt notwendig ist. Im übrigen wird die Kunststoffschicht durch die erste, weichere Kunststoffschicht 17 gebildet.

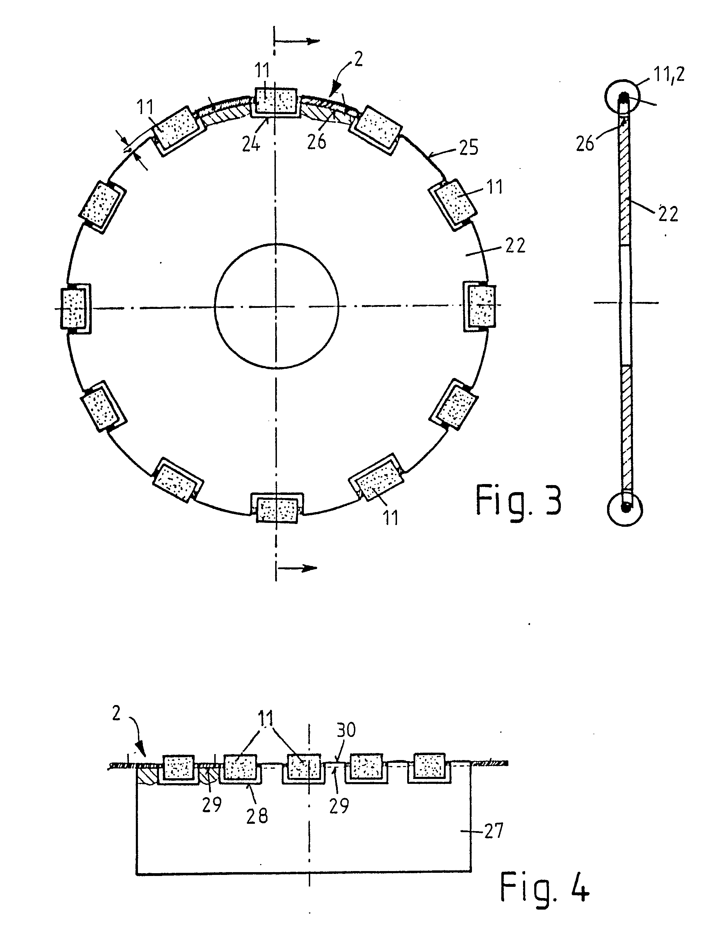

Die Ausgestaltung der Erfindung nach den Figuren 3 und 4 zeigt die Verwendung eines Sägeseils entsprechend der Darstellung und Beschreibung nach Fig. 1 an einem Kreissägeblatt 22 (Fig. 3) oder einem Gattersägeblatt 23 (Fig. 4). Bei dem in Fig. 3 dargestellten Kreissägeblatt 22 sind die Schneidelemente 11 auf dem umlaufenden endlosen Sägeseil 2 aufgebracht. Für die sich drehenden Schneidelemente 11 sind im Sägeblattgrundmaterial Ausnehmungen 44 vorgesehen, so daß die Schneidelemente bzw. Schneidperlen in diesem Bereich lose eingebettet und damit drehbar vorliegen. Der übrige Seilbereich zwischen den Schneidelementen stützt sich an der Stirnfläche 25 des Kreissägeblatts 22 ab. Hierfür ist die Stirnfläche 25 mit U-förmigen Ausnehmungen 26 versehen, um eine Art U-förmige Lagerfläche für das Seil zu bilden, damit dieses nicht vom Trägermaterial herunterspringt.

In der Fig. 3 sind die Schneidperlen 11 in ihrem Außendurchmesser zur besseren Darstellung größer ausgebildet, als das übrige Sägeseil. Hier gilt selbstverständlich das zur Fig. 1 Ausgeführte, d. h. das Sägeseil ist nahezu über seine gesamte Länge mit einem gleichbleibenden Durchmesser versehen.

Die Ausbildung der Erfindung nach Fig. 4 sieht vor, daß das Sägeseil 2 nach Fig. 1 in einem Gattersägeblatt o. dgl. ähnlich angeordnet ist, wie dies zu Fig. 3 beschrieben ist. Hierfür sind wiederum im Trägermaterial 27 Ausnehmungen 28 zur Aufnahme der Schneidperlen 11 enthalten. Die Schneidperlen können sich in den Ausnehmungen 28 ggf. frei drehen. Der übrige Seilbereich ist wiederum in einer U-förmigen Ausnehmung 29 in der Stirnfläche 30 gegen seitliches Herausrutschen gelagert. Das Sägeseil 2 selbst ist wie zu Fig. 1 beschrieben aufgebaut. Das Trägermaterial 27 kann als Gattersäge oder als sonstiges Bandsägeblatt verwendet werden. Bei einer Gattersäge wäre das Sägeseil allerdings linear gespannt und nicht als endloses Seil ausgebildet.

Die Erfindung ist nicht auf das dargestellte und beschriebene Ausführungsbeispiel beschränkt. Sie umfaßt auch vielmehr das erfindungsgemäße Prinzip und die damit verbundenen Abwandlungen, sofern sie nicht selbständig schutzfähig sind.

## Ansprüche

1. Sägewerkzeug insbesondere zur Verwendung an einer Bandsägemaschine, an einem Kreissägeblatt in einer Gattersäge o. dgl., insbesondere zur Bearbeitung von gesteinsartigen Materialien, bestehend aus einem mit einer Kunststoffbeschichtung überzogenen Drahtseil, dessen Enden einen Verschluß aufweisen mit in Abständen zueinander angeordneten diamant-, hartmetall- oder keramikbeschichteten Schneid- bzw. Schleifelementen (Schneidperlen), dadurch gekennzeichnet, daß das Seil (2) einen ersten, die gesamte Seiloberfläche umschließenden Kunststoffüberzug aus einem weichen, flexiblen Kunststoff (10) aufweist, daß die Schneidperlen (11) drehbar oder fest auf dem flexiblen Kunststoffüberzug (10) auf dem Seil (2) angeordnet sind, und daß die Zwischenräume (13) zwischen den Schneidperlen durch einen zweiten Kunststoffüberzug aus einem harten, verschleißfesten Kunststoff (14) oder durch Federn (15) ausgefüllt sind.

2. Sägewerkzeug nach Anspruch 1, dadurch gekennzeichnet, daß der zweite, harte Kunststoffüberzug (14) einen Außendurchmesser aufweist, der dem Außendurchmesser der Schneidperle (11) einschließlich Diamantbeschichtung (12) entspricht.

3. Sägewerkzeug insbesondere nach Anspruch 1, zur Verwendung an einer Bandsägemaschine, Gattersäge o. dgl., insbesondere zur Bearbeitung von gesteinsartigen Materialien, bestehend aus einem bandförmigen Trägermaterial mit darauf in Abständen angeordneten diamant-, hartmetall- oder keramikbeschichteten Schneid-oder Schleifelementen oder -segmenten, dadurch gekennzeichnet, daß das Sägeband (3) einen, das Sägebandgrundmaterial (16) zumindest im Bereich der Schneidelemente umschließenden ersten Kunststoffüberzug (17) aus einem weichen, flexiblen Kunststoff aufweist, und daß der Zwischenraum zwischen den Schneidelementen (19) zur Auffütterung auf die Außenmaße des Schneidelements mit einem weiteren Kunststoffüberzug (21) aus einem harten, verschleißfesten Kunststoff ausgefüllt ist.

4. Sägewerkzeug nach Anspruch 3, dadurch gekennzeichnet, daß die Schneidelemente (19) mit dem Grundmaterial (16) über eine formschlüssige und/oder kraftschlüssige Verbindung, insbesondere über eine Kunststoffeinbettung befestigt sind.

5. Sägewerkzeug nach einem oder mehreren der vorhergehenden Ansprüche 1 bis 4, dadurch gekennzeichnet, daß der äußere Kunststoffüberzug (14, 21) die Schneidelemente (11, 19) vor dem ersten Gebrauch als Schutzschicht umschließt.

6. Sägewerkzeug nach einem oder mehreren der vorhergehenden Ansprüche 1 bis 5, dadurch gekennzeichnet, daß die Dicke der äußeren, harten Kunststoff-Ummantelung (14, 21) etwa der Stärke des zu erwartenden Abtrags der Diamantschicht (12, 20) des Schneidelements (11, 19) entspricht.

7. Sägewerkzeug nach Anspruch 1 oder 2, dadurch gekennzeichnet, daß die auf dem Sägeseil angeordneten Schneidelemente (11) in Ausnehmungen in einem Trägermaterial angeordnet sind, wobei die Zwischenbereiche zwischen den Schneidelementen (11) in einer U-förmigen Längsnut des Trägermaterials eingebettet sind.

Fig. 1

Fig. 2

Fig. 3

Fig. 4